# FASCICULE DE BREVET EUROPEEN

(11) **EP 2 355 252 B1**
(45) Date de publication et mention de la délivrance du brevet: **19.06.2013**
(21) Numéro de dépôt: 11152650.5
(22) Date de dépôt: 31.01.2011
(51) Int. Cl.: H01R 9/26, H02B 1/052

(54) **Butée d'arrêt**
Anschlagbacke
Stop

(30) Priorité: 04.02.2010 FR 1050763
(43) Date de publication de la demande: 10.08.2011
(73) Titulaire: ABB France, 91978 Courtaboeuf Cedex (FR)
(72) Inventeur: Chaillet, Alexandre, 69370, Saint Didier Au Mont d'or (FR); Fontaine, Philippe, 69960, Corbas (FR)
(74) Mandataire: Maureau, Philippe

(56) Documents cités:
- EP-A1- 0 751 585
- FR-A1- 2 569 311
- US-A- 5 135 415
- US-A- 5 907 476
- US-B1- 6 431 909

## Description

La présente invention concerne une butée d'arrêt destinée à être positionnée notamment à une extrémité d'un bornier électrique monté sur un rail support.

Il est connu de réaliser une butée d'arrêt comprenant un corps isolant destiné à être fixé sur un rail support, et un élément ou pied métallique de fixation sur le rail logé dans le corps isolant. En particulier, le pied métallique peut se présenter sous forme allongée comprenant à l'une de ses extrémités un premier point d'appui sur un premier bord du rail, et à l'autre de ses extrémités un second point d'appui sur un second bord du rail. Le premier point d'appui peut notamment être réalisé sous forme d'une lame destinée à entailler le premier bord du rail de façon à réaliser un maintien en position de l'élément métallique sur le rail ainsi que du corps isolant dans lequel l'élément métallique est inséré.

De plus, le pied de fixation peut comprendre un troisième point d'appui sur le second bord du rail support disposé de façon décalée par rapport au second point d'appui dans une direction longitudinale du rail support.

Ces dispositions donnent satisfaction en ce qu'elles permettent d'assurer un maintien en position de la butée lors de sollicitations mécaniques en translation selon la direction du rail et appliquées sur les parties de la butée se trouvant à proximité du rail.

Toutefois, il est souhaitable d'améliorer ce maintien en position, et notamment de permettre une meilleure tenue aux contraintes appliquées sur la butée, notamment celles entrainant une torsion de la butée par rapport au rail.

La présente invention a pour but de résoudre tout ou partie des inconvénients mentionnés ci-dessus.

A cet effet, la présente invention a pour objet une butée d'arrêt destinée à être fixée sur un rail support, comprenant un corps isolant et un élément ou pied de fixation sur le rail support logé dans le corps isolant, le pied de fixation comprenant un corps métallique présentant un premier point d'appui sur un premier bord du rail support, un second point d'appui et un troisième point d'appui sur un second bord du rail support, le troisième point d'appui sur le second bord du rail support disposé de façon décalée par rapport au second point d'appui dans une direction longitudinale du rail support, le premier point d'appui comprenant une lame destinée à entailler le premier bord du rail support, et le second et le troisième point d'appui sur le second bord du rail support étant chacun formés par des bords convergents du pied de fixation.

Ces dispositions permettent non seulement un maintien en translation mais également un maintien en torsion de la butée sur le rail support par le seul pied de fixation avec son troisième point d'appui , dans le cas d'un rail support comprenant deux bords avec deux extrémités s'étendant dans deux directions opposées sur lesquels sont en contact les points d'appui.

Selon un mode de réalisation, au moins un point d'appui est formé par une portion inclinée par rapport à un plan perpendiculaire à un plan joignant les extrémités des deux bords du rail support.

Selon le même mode de réalisation, le point d'appui est formé par une arête vive de la portion inclinée.

Cette disposition empêche le glissement du point d'appui sur le bord du rail support.

Selon un mode de réalisation, le corps isolant comprend des moyens de blocage destinées à bloquer le mouvement de la lame.

Cette disposition permet de limiter l'enfoncement de la lame dans le rail support et d'obtenir ainsi un positionnement déterminé de la butée par rapport au rail support.

Selon le même mode de réalisation, le pied de fixation comprend une butée destinée à prévenir un retrait du pied de fixation du rail support.

Selon un mode de réalisation, le corps isolant et le pied de fixation comprennent une portion de prise destinée à l'insertion d'un outil agencé pour respectivement faire bras de levier à l'encontre des moyens de blocage et de la force de maintien exercée par la lame du pied de fixation sur le rail support.

Cette disposition permet d'effectuer un retrait du rail support de la butée d'arrêt.

Selon le même mode de réalisation, le corps isolant comprend un bossage, situé à proximité de la portion de prise, pour l'appui du levier formé par l'outil.

Cette disposition permet de rapprocher le point d'appui du bras levier formé par l'outil du point d'application de la force exercée par ce même levier sur le pied de fixation et de fournir un débattement suffisant à l'outil pour pouvoir exercer le bras de levier.

Selon le même mode de réalisation, le point d'application de la force exercée par le bras de levier sur le pied de fixation se situe dans un plan perpendiculaire à un plan joignant les extrémités des deux bords du rail support et passant entre les deuxième et troisième points d'appui du pied de fixation sur le rail support.

Cette disposition empêche la torsion de la butée d'arrêt lors de son retrait du rail support par l'outil faisant office de bras de levier.

Selon un mode de réalisation, des extensions de reprise de couple s'étendent dans le corps isolant transversalement à un plan joignant les extrémités des deux bords du rail support.

Ces dispositions contribuent à fournir une résistance à la torsion du corps isolant sur le pied de fixation.

Selon un mode de réalisation, le pied de fixation est réalisé en une seule pièce.

Cette disposition permet de réduire les coûts de fabrication et s'affranchit du jeu que pourrait induire l'assemblage de plusieurs pièces entre elles.

Selon un mode de réalisation, le second point d'appui et le troisième point d'appui sont disposés sur les deux branches d'une première partie en forme de « U » du pied de fixation.

Selon un aspect de l'invention le second point d'appui et/ou le troisième point d'appui sont formés par un vé de positionnement s'étendant transversalement au bord du rail.

Selon un mode de réalisation, La lame formant le troisième point d'appui est disposée de façon transversale à l'arête ou bord du rail.

Selon un aspect de l'invention, la lame est transversale au plan A joignant les extrémités des deux bords ou arête du rail support.

D'autres caractéristiques et avantages de l'invention ressortiront de la description détaillée ci-après, prises en liaison avec des dessins qui illustrent, à titre d'exemple, les principes de l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.
La figure 1 montre une vue en perspective d'une butée d'arrêt montée sur un rail support selon un premier mode de réalisation de l'invention.
La figure 2 montre une vue en perspective du pied de fixation de la butée d'arrêt de la figure 1.
La figure 3 montre une autre vue en perspective du pied de fixation de la butée d'arrêt de la figure 1.
La figure 4 montre une vue partielle de face du pied de fixation de la butée d'arrêt des figures 2 et 3 en situation sur un rail support.
La figure 5 montre une vue de dessus du pied de fixation de la butée d'arrêt des figures 2 et 3 en situation sur un rail support.
La figure 6 montre une vue de dessous en perspective de la butée d'arrêt de la figure 1.
La figure 7 montre une vue en transparence d'une butée d'arrêt selon un second mode de réalisation de l'invention.

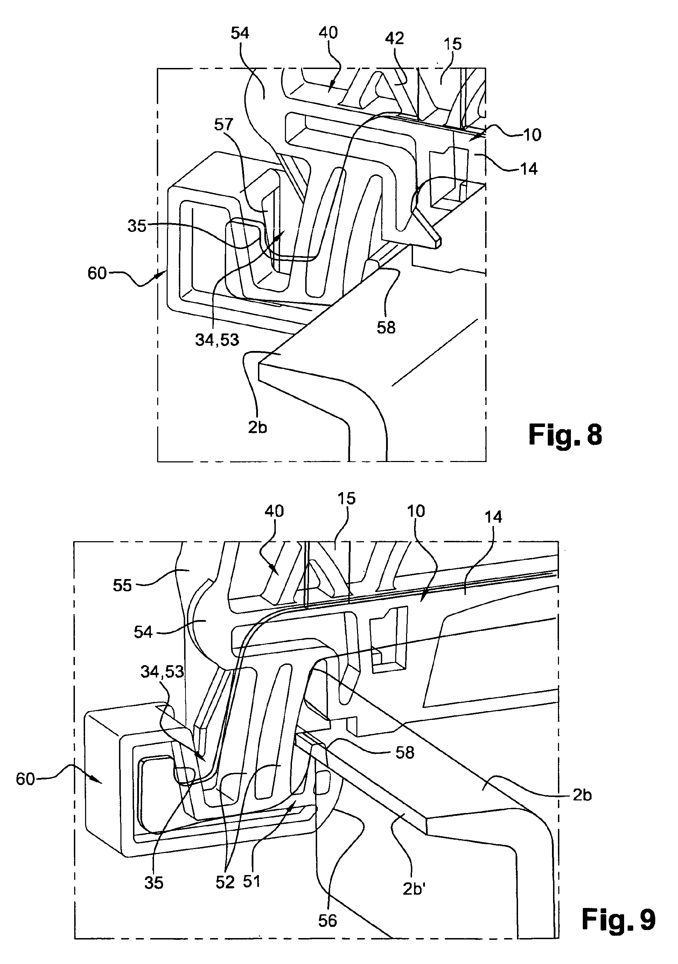

La figure 8 montre une vue partielle en perspective de la butée d'arrêt de la figure 7.
La figure 9 montre une autre vue partielle en perspective de la butée d'arrêt de la figure 7.

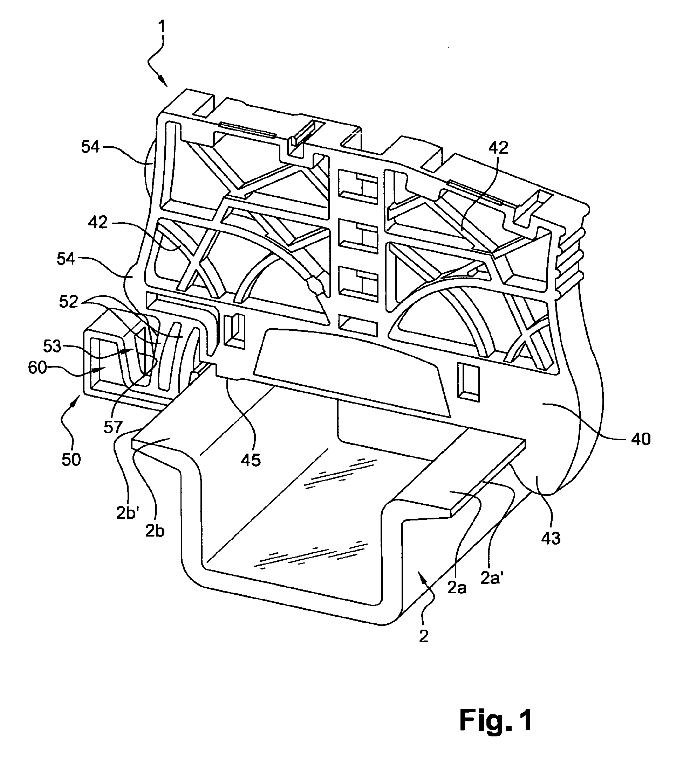

Comme illustré à la figure 1, une butée d'arrêt 1 est destinée à être montée sur un rail support 2 comprenant un premier bord 2a et un second bord 2b.

Le premier bord 2a et le second bord 2b comprennent respectivement une première terminaison 2a' et une seconde terminaison 2b'.

La butée d'arrêt 1 comprend un corps isolant 40 et un élément 10 ou pied de fixation 10 sur le rail support 2 logé dans le corps isolant 40.

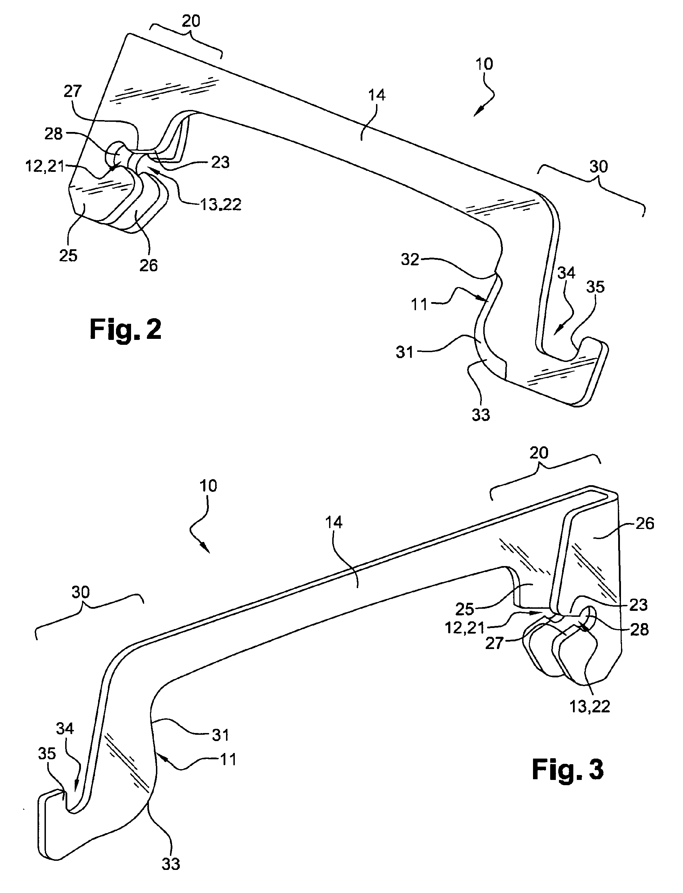

Comme illustré notamment aux figures 2 et 3, le pied de fixation 10 comprend un corps 14 reliant une première partie 20 de fixation sur le premier bord 2a du rail support 2 et une seconde partie 30 de fixation sur le second bord 2b du rail support 2.

Le pied de fixation 10 est ici illustré comme étant réalisé en une seule pièce mais celui-ci peut cependant être constitué de plusieurs parties métalliques assemblées les unes aux autres par des moyens de fixation adaptés sans pour autant sortir du cadre de l'invention.

La seconde partie de fixation 30 forme un premier point d'appui 11 sur le second bord 2b du rail support 2 tandis que la première partie 20 forme un second point d'appui 12 et un troisième point d'appui 13 sur le premier bord 2a du rail support 2.

La première partie 20 possède un profil sensiblement en forme de « U » dont la tête est tournée en regard de la seconde partie 30.

Les deux branches de la forme en « U » définissent chacune une patte de positionnement 25, 26 sur le rail support 2 s'étendant respectivement selon deux plans sensiblement parallèles.

L'une 25 de ces pattes de positionnement comporte un premier vé de positionnement 21 tandis que l'autre 26 patte de positionnement comporte un second vé de positionnement 22.

Chacun des vé de positionnement 21, 22 comporte deux bords 27 convergents vers une cavité de positionnement 28 de forme circulaire et de diamètre supérieur à la distance la plus proche entre deux bords convergents 27 d'une même patte de positionnement 25, 26.

Ces deux vé de positionnement 21, 22 sont alignés selon un plan transversal à un plan parallèle aux plans selon lesquelles s'étendent les deux pattes 25, 26 de positionnement. En position fonctionnelle sur le rail support 2, ce plan correspond sensiblement au plan A joignant les extrémités des deux bords 2b, 2a du rail support 2.

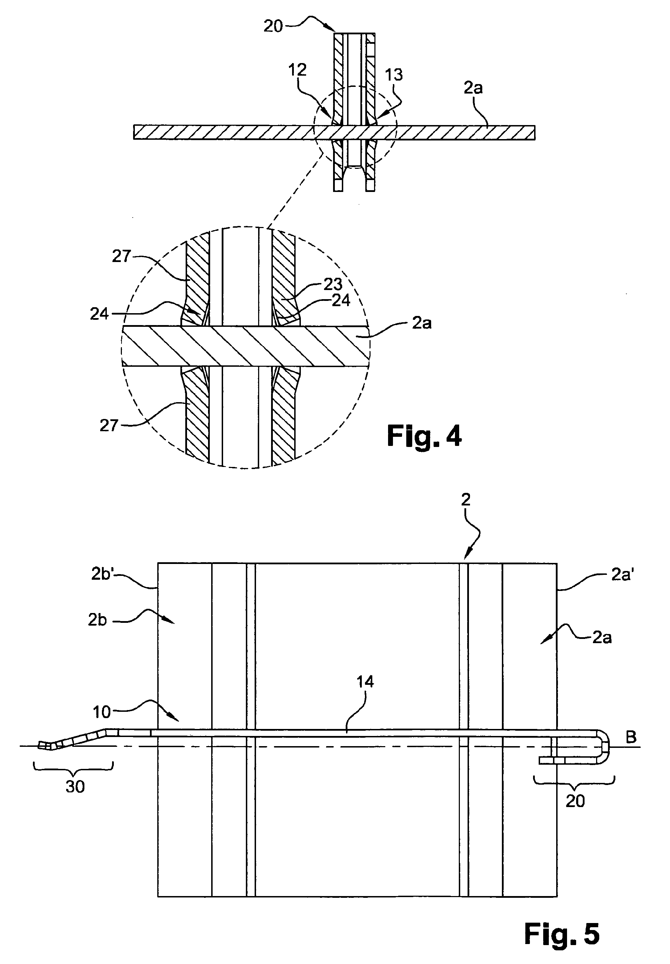

La figure 4 montre que chacun des bords convergents 27 des deux vé de positionnement 21, 22 est incliné par rapport à un plan perpendiculaire à un plan A joignant les extrémités des deux bords du rail support. Comme vu précédemment ce plan correspond sensiblement dans ce mode de réalisation à l'un des plans selon lequel s'étend une des pattes 25, 26 de positionnement de la première partie 20 du pied de fixation 10.

Ces inclinaisons mettent en évidence des portions inclinées 23 laissant apparaitre sur chacun des bords convergents 27 une arête vive 24 en regard l'une de l'autre. L'inclinaison est faite vers l'extérieur de la forme en « U » de manière à augmenter la distance séparant les arêtes 24 correspondantes des deux vé de positionnement 21, 22 et à réduire l'écart entre les deux arêtes intérieure en regard sur le même vé de positionnement 21,22.

Ces arêtes vives 24 viennent au contact de part et d'autre du bord 2a du rail support 2.

En outre, il est possible d'envisager un contact continu entre les arêtes vives 24 de deux bords convergents 27 se trouvant du même côté du bord 2a du rail support 2.

La seconde partie 30 du pied de fixation 10 sur le rail support 2 présente une forme de « J » dont l'extrémité de la branche principale est reliée par sa tête au corps 14 du pied de fixation 10 et orientée de telle sorte que le côté extérieure de cette même branche principale vient en regard de la première partie 20 du pied de fixation 10.

Une portion du bord extérieur de cette forme en « J » en regard de la première partie 20 du pied de fixation 10 est biseautée pour former une lame 31. Cette lame 31 s'étend sur la courbure 33 de la forme en « J » reliant la branche principale jusqu'à une zone 32 où le bord extérieur retrouve la même épaisseur que le corps 14 du pied de fixation 10.

Comme le montre la figure 4 la seconde partie 30 s'étend depuis un plan dans lequel est compris le corps 14 du pied de fixation 10 ainsi que l'une des pattes de positionnement de la partie positionnement dont le profil est en forme de « U » jusqu'à un plan se trouvant sensiblement dans un plan B perpendiculaire au plan A joignant les extrémités des deux bords 2b, 2a du rail support 2 et passant entre les deuxième 12 et troisième 13 points d'appui du pied de fixation 10 sur le rail support 2 lorsque la butée d'arrêt 1 est placée de façon fonctionnelle sur le rail support 2.

L'espace formé entre les deux branches de la forme en « J » forment une portion de prise 34 avec un point d'appui 35 pour un outil (non illustré) dont les fonctions sont explicitées plus loin dans la description.

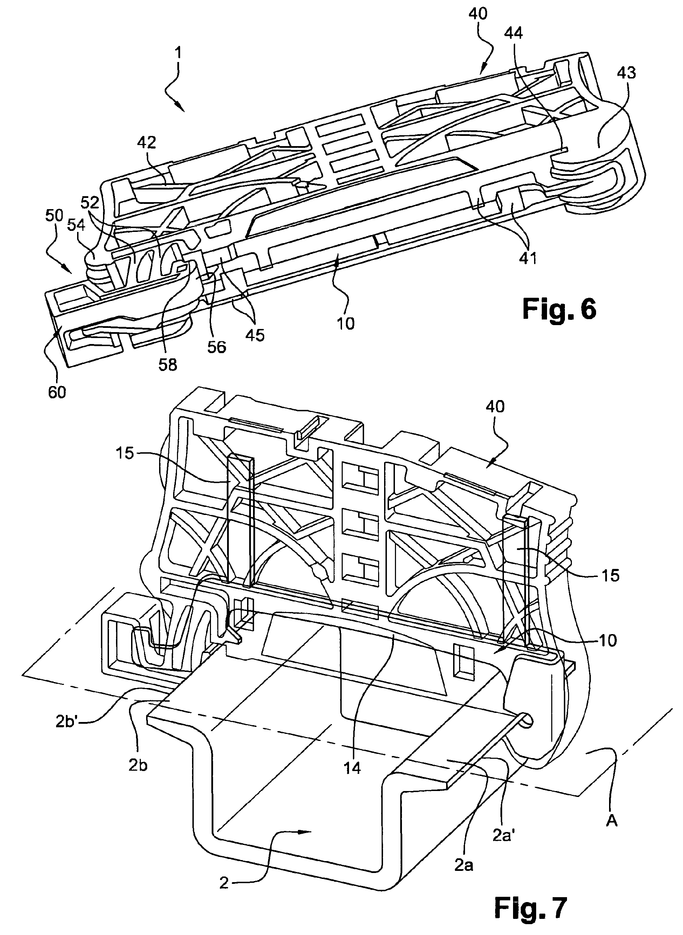

Comme illustré à la figure 6, le pied de fixation 10 est placé à l'intérieur d'un espace ménagé dans le corps isolant 40 et bloqué à l'intérieur du corps isolant 40 à l'aide de clips de retenue 41 ménagés dans le fond du corps isolant 40 dans les parois intérieures des parois latérales et s'étendant transversalement en quinconce vers l'intérieur du corps isolant 40.

Ces clips de retenue 41 sont biseautés et se dévient latéralement lors de l'engagement du pied de fixation 10 dans le corps isolant 40.

La figure 7 montre une variante du pied de fixation 10 selon un second mode de réalisation comprenant des extensions de reprise de couple 15 s'étendant transversalement à l'intérieur du corps isolant 40.

Ces extensions de reprise de couple 15 assurent une meilleure tenue à la torsion du corps isolant 40 par rapport au pied de fixation 10.

Une partie 43 du corps isolant recouvre la première partie 20 du pied de fixation 10. A cette fin, cette partie présente des encoches d'insertion 44 pour le bord 2a du rail support 2.

Les extensions de reprise de couple 15 et cette partie 43 ont pour fonction de solidariser le corps isolant 40 sur son pied de fixation 10.

Le corps isolant 40 comprend plusieurs série de nervures 42 ménagées sur ses surfaces latérales et s'étendant selon plusieurs directions différentes afin d'augmenter la résistance à la déformation.

Une partie 50 comportant des moyens de blocage 51 vient recouvrir la seconde partie 30 du pied de fixation 10.

Cette partie 50 est mobile par rapport au pied de fixation 10 et au reste du corps isolant 40 auquel elle est reliée par l'intermédiaire de deux pattes élastiques 52 s'étendant sensiblement selon une direction longitudinale au plan B perpendiculaire au plan A joignant les extrémités des deux bords 2b, 2a du rail support 2 lorsque la butée d'arrêt 1 est placée de façon fonctionnelle sur le rail support 2.

Ce mouvement permet de réaliser un écartement de la distance entre les encoches d'insertion 44 de la partie 43 recouvrant la première partie 20 du pied de fixation 10 et la partie 50 comportant les moyens de blocage 51.

Comme illustré à la figure 6, les deux pattes élastiques 52 ainsi qu'une partie des moyens de blocage 51 sont disposés d'un seul côté du pied de fixation 10.suivant l'épaisseur de la butée d'arrêt 1 L'autre côté du pied de fixation 10 est recouvert en partie par une paroi latérale du corps isolant 40 qui laisse toutefois apparente une portion de la lame 31.

Des moyens de blocage comportent un ergot 58 destiné à coopérer avec le bord 2b du rail support 2 pour prévenir un démontage de la butée 1.

Les moyens de blocage 51 comprennent également des butées 45 qui limite le mouvement de la lame 31 lors de l'insertion de la butée 1.

La combinaison des butées 45 et de l'ergot 58 permet de définir le positionnement du corps isolant 40 par rapport au rail support 2.

La partie 50 comporte une portion arrondie 56 s'étendant depuis le bas de la partie 50 jusqu'à l'ergot 58 pour faciliter le glissement du bord 2b du rail support 2 lors du montage de la butée d'arrêt 1 sur le rail support 2.

La partie 50 présente sur sa face opposée à l'ergot 58 une portion 60 de forme trapézoïdale laissant apparaitre dans la partie 50 un espace formé entre cette portion 60 de forme trapézoïdale et l'une des pattes élastiques 52. La portion de prise 34 du pied de fixation 10 fait saillie dans cet espace qui forme à son tour une prise 53 pour l'outil déjà mentionné précédemment et dont la fonction est décrite plus loin dans la description.

Cette portion 60 de forme trapézoïdale recouvre entièrement le reste de la seconde partie 30 du pied de fixation 10 mais comporte néanmoins une ouverture 57 sur sa paroi se trouvant en regard de la prise 53 permettant à l'outil de venir au contact du point d'appui 35 de la seconde partie 30 du pied de fixation 10 lors de la translation de la partie 50 du corps isolant 40.

Pour la pose de la butée d'arrêt 1 sur le rail support 2, l'utilisateur commence par engager les deux vé 21, 22 de positionnement de la première partie 20 sur la terminaison 2a' du second bord 2a du rail support 2. Les arêtes vives 24 des deux vé 21, 22 de positionnement accrochent alors de part et d'autre du bord 2a du rail support 2 rendant difficile la translation de la butée 1 sur le rail support 2 ainsi que la torsion de celle-ci de par l'écartement des portions inclinées 23 qui lui confère une portée accrue sur le bord 2a du rail support 2.

L'utilisateur va ensuite effectuer un mouvement de pivotement autour des deux vé 21, 22 de positionnement afin de ramener la portion arrondie 56 de la partie 50 au contact du premier bord 2b du rail support 2.

La partie 50 se décale alors et la lame 31 vient au contact de la terminaison 2b' du premier bord 2b du rail support 2 transversalement à ce dernier ainsi qu'au plan A.

En forçant davantage le mouvement de pivotement de la butée d'arrêt 1, la lame 31 entaille le premier bord 2b du rail support 2 depuis sa terminaison 2b' jusqu'à une profondeur limitée par la mise en contact du rail support 2 avec les butées 45 du corps isolant 40.

Le bord 2b du rail support 2 se trouve alors dans une position autorisant le mouvement de la partie 50 en direction de la partie de la première partie 20 jusqu'en butée contre l'ergot 58. L'ergot 58 se trouve alors en dessous du bord 2b du rail support 2 verrouillant la position de la lame 31 sur le bord 2b du rail support 2 et donc verrouillant le retrait du rail de la butée d'arrêt 1.

Le positionnement en force de la lame 31 sur le bord 2b du rail support 2 assure un blocage en translation du pied de fixation 10 sur le rail support 2 et les second 12 et troisième 13 points d'appui assurent quant à eux, par l'intermédiaire des portions inclinées 23 avec leur arêtes vives 24 leur conférant une portée plus grande, une plus grande résistance à la torsion du pied de fixation 10 sur le rail support 2.

Pour la dépose de la butée d'arrêt 1 du rail support 2, l'utilisateur doit disposer d'un outil ayant une extrémité plane et une longueur suffisante pour servir de bras de levier. Cet outil peut être par exemple un tournevis plat.

L'utilisateur engage alors l'extrémité plate du tournevis dans la prise 53 de la partie 50 du corps isolant 40.

Pour placer correctement le tournevis, le corps isolant 40 dispose de flasques de positionnement 54 disposées en quinconce sur une face du corps isolant 40 et conduisant l'extrémité du tournevis jusqu'à la prise 53 de la partie 50.

Afin d'augmenter l'effet de bras de levier, le corps isolant 40 dispose sur cette même face d'un bossage situé à proximité de la prise 53 sur la partie 50 du corps isolant 40.

Cette extrémité vient au contact de la portion de prise 34 du pied de fixation 10.

L'utilisateur effectue alors un mouvement de pivotement à l'aide du tournevis ayant la fonction de levier pour repousser la portion 60 de forme trapézoïdale de la partie 50 du corps isolant 40 et donc pour autoriser le retrait de la lame 31 par l'écartement de l'ergot 58 du bord 2b du rail support 2.

Le tournevis vient ensuite à l'encontre du point d'appui 35 de la portion de prise 34 de la seconde partie 30 du pied de fixation 10, celui-ci pouvant passer au travers de l'ouverture 57 ménagée sur la paroi de la portion 60 de forme trapézoïdale.

En forçant davantage le mouvement de levier du tournevis, le blocage de la lame 31 sur le bord 2b du rail support 2 est supprimé.

L'utilisateur effectue alors un mouvement de pivotement autour des deux vé 21, 22 de positionnement de la première partie 20 dans le sens inverse de celui de la pose, puis il effectue un mouvement de translation afin de dégager les deux vé 21, 22 de positionnement du bord 2a du rail support 2.

La butée d'arrêt 1 peut alors être réutilisée à un autre endroit sur le rail support 2.

## Revendications

1. Butée d'arrêt (1) destinée à être fixée sur un rail support (2), comprenant un corps isolant (40) et un élément ou pied de fixation (10) sur le rail support (2) logé dans le corps isolant (40), le pied de fixation (10) comprenant un corps métallique (14) présentant un premier point d'appui (11) sur un premier bord (2b) du rail support (2), un second point d'appui (12) et un troisième point d'appui (13) sur un second bord (2a) du rail support (2),
le troisième point d'appui (13) sur le second bord (2a) du rail support (2) disposé de façon décalée par rapport au second point d'appui (12) dans une direction longitudinale du rail support (2),
le premier point d'appui (11) comprenant une lame (31) destinée à entailler le premier bord (2a) du rail support (2), et le second (12) et le troisième (13) point d'appui sur le second bord (2a) du rail support (2) étant chacun formés par des bords convergents (27) du pied de fixation (10).

2. Butée d'arrêt (1) selon la revendication 1 dans laquelle au moins un point d'appui (11, 12, 13) est formé par une portion inclinée (23) par rapport à un plan perpendiculaire à un plan (A) joignant les extrémités des deux bords (2b, 2a) du rail support (2).

3. Butée d'arrêt (1) selon la revendication 2 dans laquelle le point d'appui (11, 12, 13) est formé par une arête vive (24) de la portion inclinée (23).

4. Butée d'arrêt (1) selon l'une des revendications précédentes dans laquelle le corps isolant (40) comprend des moyens de blocage (51) destinées à bloquer le mouvement de la lame (31).

5. Butée d'arrêt (1) selon la revendication 4 dans laquelle le pied de fixation (10) comprend une butée destinée à prévenir un retrait du pied de fixation (10) du rail support (2).

6. Butée d'arrêt (1) selon l'une des revendications 4 à 5 dans laquelle le corps isolant (40) et le pied de fixation (10) comprennent chacun une portion formant prise (34, 53) destinée à l'insertion d'un outil agencé pour respectivement faire bras de levier à l'encontre des moyens de blocage (51) et de la force de maintien exercée par la lame (31) du pied de fixation (10) sur le rail support (2).

7. Butée d'arrêt (1) selon la revendication 6 dans laquelle le corps isolant (40) comprend un bossage (55), situé à proximité des portion formant prise (34, 55), pour l'appui du levier formé par l'outil.

8. Butée d'arrêt (1) selon l'une des revendications 6 à 7 dans laquelle le point d'application (35) de la force exercée par le bras de levier sur le pied de fixation (10) se situe dans un plan (B) perpendiculaire à un plan (A) joignant les extrémités des deux bords (2b, 2a) du rail support (2) et passant entre les deuxième (12) et troisième (13) points d'appui du pied de fixation (10) sur le rail support (2).

9. Butée d'arrêt (1) selon l'une des revendications précédentes dans laquelle des extensions de reprise de couple (15) s'étendent dans le corps isolant (40) transversalement à un pian (A) joignant les extrémités des deux bords (2b, 2a) du rail support (2).

10. Butée d'arrêt (1) selon l'une des revendications précédentes dans laquelle le pied de fixation (10) est réalisé en une seule pièce.

11. Butée d'arrêt (1) selon l'une des revendications précédentes dans laquelle le second point d'appui (12) et le troisième point d'appui (13) sont disposés sur les deux branches d'une première partie (20) en forme de « U » du pied de fixation (10).

12. Butée d'arrêt (1) selon l'une des revendications précédentes dans laquelle le second point d'appui (12) et/ou le troisième point d'appui (13) sont formés par un vé de positionnement (21,22) s'étendant transversalement au bord du rail.

## Patentansprüche

1. Anschlagbacke (1), die dazu bestimmt ist, auf einer Stützschiene (2) befestigt zu sein, die einen Isolierkörper (40) und ein im Isolierkörper (40) untergebrachtes Befestigungselement oder -fuß (10) auf der Stützschiene (2) umfasst, wobei der Befestigungsfuß (10) einen Metallkörper (14) umfasst, der einen ersten Abstützpunkt (11) auf einem ersten Rand (2b) der Stützschiene (2), einen zweiten Abstützpunkt (12) und einen dritten Abstützpunkt (13) auf einem zweiten Rand (2a) der Stützschiene (2) aufweist,
wobei der dritte Abstützpunkt (13) auf den zweiten Rand (2a) der Stützschiene (2) im Verhältnis zum zweiten Abstützpunkt (12) in einer Längsrichtung der Stützschiene (2) versetzt angeordnet ist,
wobei der erste Abstützpunkt (11) eine Zunge (31) umfasst, die dazu bestimmt ist, den ersten Rand (2a) der Stützschiene (2) zu schlitzen, und der zweite (12) und der dritte (13) Abstützpunkt auf dem zweiten Rand (2a) der Stützschiene (2) jeweils von konvergierenden Rändern (27) des Befestigungsfußes (10) gebildet sind.

2. Anschlagbacke (1) nach Anspruch 1, wobei mindestens ein Abstützpunkt (11, 12, 13) von einem im Verhältnis zu einer Ebene senkrecht zu einer Ebene (A), die die Enden der zwei Ränder (2b, 2a) der Stützschiene (2) verbindet, geneigten Abschnitt (23) gebildet wird.

3. Anschlagbacke (1) nach Anspruch 2, wobei der Abstützpunkt (11, 12, 13) von einer scharfen Kante (24) des geneigten Abschnitts (23) gebildet wird.

4. Anschlagbacke (1) nach einem der vorangehenden Ansprüche, wobei der Isolierkörper (40) Blockiermittel (51) umfasst, die dazu bestimmt sind, die Bewegung der Zunge (31) zu blockieren.

5. Anschlagbacke (1) nach Anspruch 4, wobei der Befestigungsfuß (10) einen Anschlag umfasst, der dazu bestimmt ist, einem Rückzug des Befestigungsfußes (10) von der Stützschiene (2) vorzubeugen.

6. Anschlagbacke (1) nach einem der Ansprüche 4 bis 5, wobei der Isolierkörper (40) und der Befestigungsfuß (10) jeweils einen aufnahmebildenden Abschnitt (34, 53) umfassen, der zum Einsetzen eines Werkzeugs bestimmt ist, das ausgebildet ist, um jeweils als Hebelarm gegen Blockiermittel (51) und die Haltekraft zu dienen, die von der Zunge (31) des Befestigungspunkts (10) auf die Stützschiene (2) ausgeübt wird.

7. Anschlagbacke (1) nach Anspruch 6, wobei der Isolierkörper (40) zum Abstützen des Hebels, der von dem Werkzeug gebildet wird, eine Wulst (55) umfasst, die sich in der Nähe des aufnahmebildenden (34, 55) Abschnitts befindet.

8. Anschlagbacke (1) nach einem der Ansprüche 6 bis 7, wobei sich der Anwendungspunkt (35) der Kraft, die von dem Hebelarm auf den Befestigungspunkt (10) ausgeübt wird, in einer Ebene (B) senkrecht zu einer Ebene (A) befindet, die die Enden der zwei Ränder (2b, 2a) der Stützschiene (2) verbindet und zwischen dem zweiten (12) und dritten (13) Abstützpunkt des Befestigungsfußes (10) auf der Stützschiene (2) läuft.

9. Anschlagbacke (1) nach einem der vorangehenden Ansprüche, wobei sich Kraftübernahmeverlängerungen (15) im Isolierkörper (40) quer zu einer Ebene (A) erstrecken, die die Enden der zwei Ränder (2b, 2a) der Stützschiene (2) verbindet.

10. Anschlagbacke (1) nach einem der vorangehenden Ansprüche, wobei der Befestigungsfuß (10) aus einem einzigen Stück hergestellt ist.

11. Anschlagbacke (1) nach einem der vorangehenden Ansprüche, wobei der zweite Abstützpunkt (12) und der dritte Abstützpunkt (13) auf den zwei Schenkeln eines ersten Teils (20) in U-Form des Befestigungsfußes (10) angeordnet sind.

12. Anschlagbacke (1) nach einem der vorangehenden Ansprüche, wobei der zweite Abstützpunkt (12) und/oder der dritte Abstützpunkt (13) von einem Positionsprisma (21, 22) gebildet werden, das sich quer zum Rand der Schiene erstreckt.

## Claims

1. A stop (1) designed to be fastened on a support rail (2), comprising an insulating body (40) and a fastening element or leg (10) on the support rail (2) housed in the insulating body (40), the fastening leg (10) comprising a metal body (14) having a first bearing point (11) on a first edge (2b) of the support rail (2), a second bearing point (12) and a third bearing point (13) on a second edge (2a) of the support rail (2),
the third bearing point (13) on the second edge (2a) of the support rail (2) positioned offset relative to the second bearing point (12) in a longitudinal direction of the support rail (2),
the first bearing point (11) comprising a blade (31) designed to score the first edge (2a) of the support rail (2), and the second (12) and third (13) bearing points on the second edge (2a) of the support rail (2) each being formed by convergent edges (27) of the fastening leg (10).

2. The stop (1) according to claim 1, wherein at least one bearing point (11, 12, 13) is formed by an inclined portion (23) relative to a plane perpendicular to a plane (A) joining the ends of the two edges (2b, 2a) of the support rail (2).

3. The stop (1) according to claim 2, wherein the bearing point (11, 12, 13) is formed by a sharp edge (24) of the inclined portion (23).

4. The stop (1) according to one of the preceding claims, wherein the insulating body (40) comprises locking means (51) designed to lock the movement of the blade (31).

5. The stop (1) according to claim 4, wherein the fastening leg (10) comprises an abutment designed to prevent removal of the fastening leg (10) from the support rail (2).

6. The stop (1) according to one of claims 4 to 5, wherein the insulating body (40) and the fastening leg (10) each comprise a portion forming an intake (34, 53) designed for the insertion of a tool arranged respectively to form a lever arm against the locking means (51) and the maintaining force exerted by the blade (31) of the fastening leg (10) on the support rail (2).

7. The stop (1) according to claim 6, wherein the insulating body (40) comprises a boss (55), situated near intake-forming portions (34, 55), for bearing of the lever formed by the tool.

8. The stop (1) according to one of claims 6 to 7, wherein the application point (35) of the force exerted by the lever arm on the fastening leg (10) is in a plane (B) perpendicular to a plane (A) joining the ends of the two edges (2b, 2a) of the support rail (2) and passing between the second (12) and third (13) bearing points of the fastening leg (10) on the support rail (2).

9. The stop (1) according to one of the preceding claims, wherein torque reacting extensions (15) extend in the insulating body (40) transversely to a plane (A) joining the ends of the two edges (2b, 2a) of the support rail (2).

10. The stop (1) according to one of the preceding claims, wherein the fastening leg (10) is made in a single piece.

11. The stop (1) according to one of the preceding claims, wherein the second bearing point (12) and the third bearing point (13) are positioned on the two branches of a first U-shaped part (20) of the fastening leg (10).

12. The stop (1) according to one of the preceding claims, wherein the second bearing point (12) and/or the third bearing point (13) are formed by a positioning V-groove (21, 22) extending transversely to the edge of the rail.
